# EUROPEAN PATENT APPLICATION

(11) **EP 4 648 300 A1**
(43) Date of publication of application: **12.11.2025**
(21) Application number: 23914329.0
(22) Date of filing: 27.09.2023
(51) Int. Cl.: H04B 7/0413

(54) **DISTRIBUTED ANTENNA SYSTEM AND COMMUNICATION SYSTEM**

(30) Priority: 03.01.2023 CN 202320017554 U
(71) Applicant: PROSE TECHNOLOGIES (SUZHOU) CO., LTD., Suzhou, Jiangsu 215345 (CN)
(72) Inventor: ZHANG, Rui, Jiangsu 215345 (CN); MIN, Haijun, Jiangsu 215345 (CN)
(74) Representative: Isarpatent
(86) International application number: PCT/CN2023/122059
(87) International publication number: WO 2024/146191

(57) **Abstract**

The present disclosure relates to a distributed antenna system including at least one remote unit and a first access unit. The first access unit includes one or more frequency sub-boards, a first synchronization module, and a first signal processing module. At least one frequency sub-board of the one or more frequency sub-boards is configured to receive a time-division duplexing (TDD) signal. The first synchronization module is configured to be communicatively connected to the frequency sub-board receiving the TDD signal. The first signal processing module is communicatively connected to the first synchronization module and configured to process the TDD signal received via the at least one frequency sub-board.

## Description

### TECHNICAL FIELD

The present disclosure generally relates to the communication field and, more particularly, to a distributed antenna system and a communication system including the distributed antenna system.

### BACKGROUND

Currently, a commercially deployed multi-network integration system (including an active distributed system and a passive distributed system) mostly only supports a single 4G TDD network or a single 5G time division duplexing (TDD) network. More specifically, the current commercially deployed active multi-network integration system has a relatively single network standard due to the particularity of the synchronization requirements for the TDD network standard in an uplink-downlink and the base station triggering. Thus, the current multi-network integration system cannot satisfy the requirement for multi-TDD network integration coverage, i.e., the coverage requirement for a shared network of one or more 4G TDDs and one or more 5G TDDs.

### SUMMARY

In view of the above, the existing technology cannot provide a distributed antenna system compatible with a plurality of TDD networks. Therefore, an adaptive multi-mode TDD network-based distributed system is needed to meet and fulfill the requirement of a multi-network and multi-mode wireless network coverage in the 5G era (a TDD network standard compatible with 4G and 5G).

In order to address the above mentioned technical problems, inventors of the present disclosure provide a distributed antenna system. The distributed antenna system includes a synchronization module, enabling synchronization for a plurality of TDD networks. In particular, the present disclosure provides a distributed antenna system including at least one remote unit and a first access unit. The first access unit includes:
one or more frequency sub-boards, at least one frequency sub-board of the one or more frequency sub-boards being configured to receive a time-division duplexing (TDD) signal;
a first synchronization module configured to be communicatively connected to the frequency sub-board receiving the TDD signal; and
a first signal processing module communicatively connected to the first synchronization module and configured to process the TDD signal received via the at least one frequency sub-board.

The first synchronization module is included in the distributed antenna system of the present disclosure, and thus the system can be communicatively connected to the frequency sub-board receiving the TDD signal to perform synchronization processing on the TDD signal. Thus, the TDD signal can co-exist with other TDD signals in the same distributed antenna system. Then, the distributed antenna system of the present disclosure can process the plurality of TDD signals simultaneously.

In an embodiment of the present disclosure, the first synchronization module is configured to parse the TDD signal to achieve TDD synchronization of the distributed antenna system.

In an embodiment of the present disclosure, the first access unit further includes a first optical module communicatively connected to the first signal processing module and coupled with the at least one remote unit via an analog optical fiber.

In an embodiment of the present disclosure, the distributed antenna system further includes a second access unit, the second access unit being coupled with the at least remote unit via the analog optical fiber, wherein the second access unit includes:
one or more frequency sub-boards, at least one frequency sub-board of the one or more frequency sub-boards being configured to receive a TDD signal;
a second synchronization module configured to be communicatively connected to the frequency sub-board that receives the TDD signal; and
a second signal processing module communicatively connected to the second synchronization module and configured to process the TDD signal received by the at least one frequency sub-board.

In an embodiment of the present disclosure, the second synchronization module is configured to parse the TDD signal to achieve TDD synchronization of the distributed antenna system.

In an embodiment of the present disclosure, the second access unit further includes a second optical module, the second optical module being communicatively connected to the second signal processing module and coupled with the at least one remote unit via the analog optical fiber.

In an embodiment of the present disclosure, the at least one remote unit includes a plurality of remote units, and the distributed antenna system further includes a network expansion unit, the network expansion unit being coupled between the first access unit and the plurality of remote units via the analog optical fiber.

In an embodiment of the present disclosure, the first optical module is further configured to receive an uplink analog optical signal from the remote unit and convert the uplink analog optical signal into an uplink analog radio frequency signal.

In an embodiment of the present disclosure, the first access unit includes a third synchronization module configured to be communicatively connected to another frequency sub-board that receives a TDD signal.

In an embodiment of the present disclosure, the first synchronization module is a 4G synchronization module, and the third synchronization module is a 5G synchronization module.

In an embodiment of the present disclosure, the second access unit includes a fourth synchronization module configured to be communicatively connected to another frequency sub-board that receives a TDD signal.

In an embodiment of the present disclosure, the second synchronization module is a 4G synchronization module and the fourth synchronization module is a 5G synchronization module.

In an embodiment of the present disclosure, the at least one remote unit includes one or more types of network standards, one or more network frequency bands, or one or more service types.

In an embodiment of the present disclosure, another frequency sub-board of the one or more frequency sub-boards receives a frequency-division duplexing (FDD) signal.

In addition, for the current multi-network convergence systems in operation, due to the relatively wide bandwidth of 5G networks, most multi-network convergence systems only support a single spectrum of 5G TDD networks, and thus failing to meet the co-network coverage requirements of multiple 5G TDD network spectrums. To solve this technical problem, in one embodiment according to the present disclosure, the first access unit and at least one remote unit are coupled via an analog optical fiber. In this way, the high-bandwidth characteristics of the analog optical fiber can be applied to the distributed antenna system according to the present disclosure, thereby enabling the distributed antenna system according to the present disclosure to meet the common network coverage requirements of multiple 5G TDD network spectrums.

In addition, a second aspect of the present disclosure provides a communication system. The communication system includes one or more base stations and a distributed antenna system coupled with the one or more base stations according to the first aspect of the present disclosure.

In summary, the distributed antenna system of the present disclosure can include a first synchronization module. Thus, the system can be communicatively connected to the frequency sub-board receiving the TDD signal to perform synchronization processing on the TDD signal. Thus, the TDD signal can co-exist with other TDD signals in the same distributed antenna system. Then, the distributed antenna system of the present disclosure can process the plurality of TDD signals simultaneously.

### BRIEF DESCRIPTION OF THE DRAWINGS

Embodiments are described with reference to the drawings in an easily understood method. The features, technical characteristics, advantages, and implementation methods of an operator carrier tracking method and device for a distributed antenna system are further described.
FIG. 1 is a schematic principle diagram of a distributed antenna system 100 according to some embodiments of the present disclosure.
FIG. 2 is a schematic system block diagram of a distributed antenna system 200 according to some embodiments of the present disclosure.

Other characteristics, features, advantages, and benefits of the present disclosure become obvious through the detailed description in connection with the accompanying drawings.

### DETAILED DESCRIPTION OF THE EMBODIMENTS

In the following detailed description of the preferred embodiments, reference can be made to the accompanying drawings, which form a part of the present disclosure. The accompanying drawings illustratively show specific embodiments capable of implementing the present disclosure. The exemplary embodiments are not intended to exhaust all embodiments according to the present disclosure. It can be understood that, without departing from the scope of the present disclosure, other embodiments can be used, and structural or logical modifications can be made. Therefore, the following description is not restrictive, and the scope of the present disclosure is subject to the appended claims.

The term "include" and its variations used in the specification means open inclusion, i.e., "including but not limited to." Unless specifically stated otherwise, the term "or" means "and/or." The term "based on" means "at least partially based on." The terms "an exemplary embodiment" and "an embodiment" mean "at least one exemplary embodiment." The term "another embodiment" means "at least one additional embodiment." The terms "first," "second," etc., may refer to different or identical objects. Other explicit and implicit definitions may also be included below.

As mentioned above, a traditional distributed antenna system faces the multi-operator and multi-service access problem of compatibility for 2G, 3G, 4G, and 5G networks. The transmission loss differences of signals at different frequencies can be significant. The traditional distributed antenna system can be difficult to satisfy the requirement for the simultaneous access of a plurality of TDD wireless communication networks, e.g., the interference between signals of multi-standards of the multi-base stations, and power balance between the signals of multi-standards of the multi-base stations. More specifically, the existing technology cannot provide a distributed antenna system compatible with a plurality of TDD networks. Therefore, an adaptive multi-mode TDD network-based distributed system is needed to meet and fulfill the requirement of a multi-network and multi-mode wireless network coverage in the 5G era (a TDD network standard compatible with 4G and 5G).

To address at least one or more of the above issues and other potential problems, the inventors of the present disclosure provide a distributed antenna system. The distributed antenna system includes a synchronization module, enabling communication connection with a frequency sub-board when receiving the time-division duplex (TDD) signal. Then, the TDD signal can be processed synchronously to make it possible for different TDD signals to coexist within the same distributed antenna system. Moreover, the distributed antenna system of the present disclosure can simultaneously process a plurality of TDD signals. The distributed antenna system with a synchronization module can process two or more TDD signals simultaneously to be compatible with a plurality of TDD signals and allow the distributed antenna system of the present disclosure to simultaneously access the plurality of TDD signals.

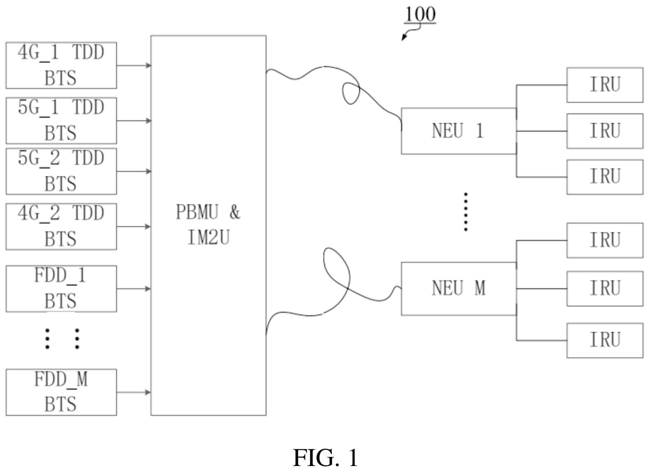

FIG. 1 is a schematic principle diagram of a distributed antenna system 100 according to some embodiments of the present disclosure. As seen in FIG. 1, an access unit of the present disclosure, i.e., a PBMU module or an IM2U module in FIG. 1, includes a synchronization module. Thus, a plurality of TDD base station units can be connected. Of course, with this capability, it does not necessarily mean that the distributed antenna system 100 has to be connected to the plurality of TDD base station units must simultaneously, and the distributed antenna system 100 can be connected to only one base station unit, which also falls within the scope of the present disclosure. For example, FIG. 1 illustrates four TDD base station units, such as 4G_1 TDD BTS, 4G_2 TDD BTS, 5G_1 TDD BTS, and 5G_2 TDD BTS. However, the four TDD base station units shown in FIG. 1 are merely exemplary and not restrictive. The distributed antenna system can be connected to only two TDD base station units, three TDD base station units, four TDD base station units, or even just one TDD base station unit.

In summary, the distributed antenna system of the present disclosure can support access to one or two 4G TDD networks, achieving co-site and co-location applications for single-mode or dual-mode TDD networks. Alternatively, the distributed antenna system of the present disclosure can support access to one or two 5G TDD networks, achieving co-site and co-location applications for single-mode or dual-mode TDD networks. Alternatively, the distributed antenna system of the present disclosure can maximally support a combination of two 4G TDD networks and two 5G TDD networks, achieving co-site and co-location applications for (up to four sets of) multi-mode TDD networks. Furthermore, the distributed antenna system of the present disclosure can support the combination of one or more TDD networks with a plurality of FDD networks, achieving remote applications for hybrid multi-mode networks.

In addition, preferably, in response to the challenge of high-bandwidth data transmission faced by the traditional distributed antenna system based on digital fiber optics, the hardware cost for the extended remote transmission can be increased significantly. To increase the applicability in the high-bandwidth application scenario, the connection between the access unit PBMU&IM2U and the network expansion unit NEU, and the connection between the network expansion unit NEU and the remote unit IRU are established through analog optical fiber optics. Thus, the distributed antenna system of the present disclosure can maximally support the wireless extended remote application of the TDD network combination of four frequency bands (two 4G TDD spectrum bands and two 5G TDD spectrum bands), and minimally support one group of 4G TDD spectrum bands or two 5G TDD spectrum bands). The (multi-mode TDD or single mode TDD network) wireless extended remote application can be realized through a relay unit (high-bandwidth analog optical fiber optics). In summary, preferably, the first access unit PBMU&IM2U and at least one remote unit IRU can be coupled via the analog optical fiber optics.

In the technical solution of the present disclosure, the adaptive tracking, locking, and synchronization switching process for a multi-mode TDD base station in an off-network state includes, when the antenna system supports maximum TDD network combination (two groups of 4G TDD and two groups of 5G TDD), is a certain base station network goes offline, the access unit can automatically track and lock the corresponding off-network TDD base station according to the distributed antenna system of the present disclosure. The uplink-downlink information of all on-network TDD base stations can be broadcasted to the far end to ensure the extended remote coverage of the wireless signal of the on-network TDD base station.

Thus, the synchronization module of the access unit in the distributed antenna system of the present disclosure can receive and parse a base station signal to achieve (multi-mode) TDD network (access unit) synchronization. The access units IMU&IM2U of the distributed antenna system 100 of the present disclosure can achieve high bandwidth extended remote to the network expansion unit (NEU) via an analog optical fiber optics. The NEU can achieve the high bandwidth extended remote to the coverage unit (IRU) via an analog optical fiber optics. Thus, RF-extended remote deep coverage for (multi-mode) TDD networks and FDD networks can be realized. Furthermore, the coverage unit of the distributed antenna system of the present disclosure can receive an RF broadcast and a monitoring broadcast and parse and synchronize the broadcasts to the uplink-downlink of the current base station to uplink-downlink switching of the uplink-downlink of the TDD network of the corresponding antenna port. Thus, co-site and co-location coverage of multi-mode TDD networks can be realized. The access unit of the distributed antenna system of the present disclosure can adaptively and synchronously track single-mode or multi-mode TDD (including 4G TDD or 5G TDD) base station signals and broadcast the uplink-downlink information of the TDD base stations to the coverage unit, which satisfies the co-site and co-location coverage for multi-mode TDD signals. The multi-mode TDD networks can be tracked and locked in real-time when being on-network and off-network. When the co-side and co-location coverage of the multi-mode TDD signals on the network is satisfied, the uplink-downlink of the TDD signal can be synchronously tracked, and the self-adaptive TDD signal can be synchronously switched.

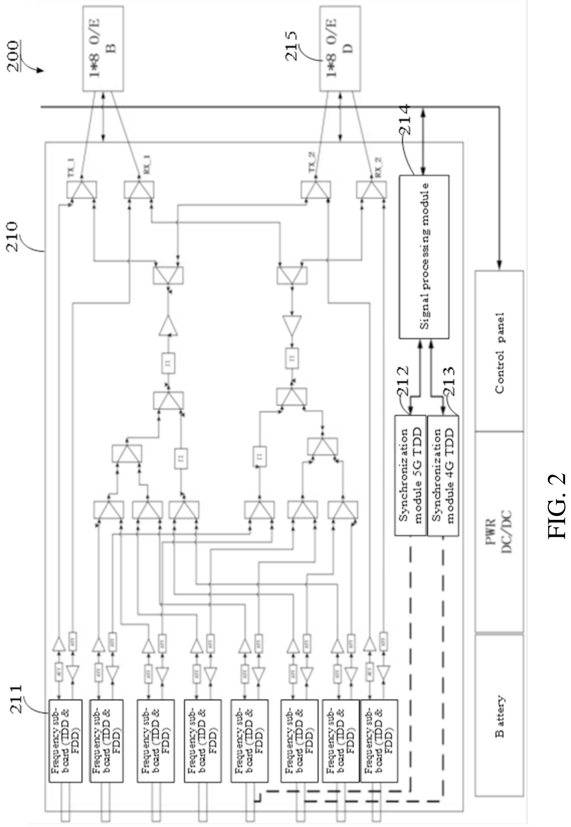

FIG. 2 is a schematic system block diagram of a distributed antenna system 200 according to some embodiments of the present disclosure. In the distributed antenna system of the present disclosure, according to the network information of the TDD base station, the access unit can be maximally configured with two sets of 4G TDD synchronization modules and two sets of 5G TDD synchronization modules. According to the statuses of the 4G TDD and 5G TDD base stations, the distributed antenna system can self-adaptively lock and be synchronized to an uplink-downlink status of the corresponding operator network. Then, the base station information can be received by the access unit 210 of the distributed antenna system 200 of the present disclosure. According to the synchronization locking status of the base station network from the TDD synchronization module 212 of the corresponding base station networks, the host and module control unit can define the network frame transmission preference principle. Then, the system can adaptively configure the frame header transmitted by the RF broadcast (TDD network) and calculate frame header differences between the synchronized TDD networks and the TDD networks transmitted by the RF broadcast (i.e., the TDD network conforming to the self-adaptive synchronization principle). Then, the access unit 210 of the distributed antenna system 200 of the present disclosure can receive base station network information via the synchronization module 212, adaptively parse the uplink-downlink configuration information of the synchronized base station, and calculate or obtain a switch point of the Uplink-Downlink of the synchronized base station. The status information of the currently synchronized base station, the frame header difference information of the TDD network, the Uplink-Downlink switch point information of the TDD networks can be broadcasted to the coverage unit, i.e., IRU in FIG. 1, through monitoring. Subsequently, a frame header identifier (the Uplink-Downlink frame header information of the preferred TDD base station of the access unit) of the RF broadcast of the access unit 210 can be received by the coverage unit IRU of the distributed antenna system 200 of the present disclosure. Meanwhile, through the monitoring broadcast, the on-network status (synchronization) information of the TDD networks of the current access unit and the frame header Uplink-Downlink difference of the TDD networks can be received. The frame headers of the TDD base station networks can be restored. The Uplink-Downlink information of the TDD networks can be restored to the antenna port of the corresponding TDD network to realize the co-station coverage of the multi-mode TDD networks.

That is, the access unit 210 of the distributed antenna system 200 of the present disclosure can receive the RF information of the TDD base station through the at least one frequency sub-board 211 of a plurality of frequency sub-boards. For example, the corresponding network base station can be adaptively synchronized through the adapted 4G TDD synchronization module 213 and the 5G TDD synchronization module 212. FIG. 2 illustrates an example of 8 frequency sub-boards, which is merely exemplary, not restrictive. For example, only two frequency sub-boards may be included, or more frequency sub-boards may be included, or even only one frequency sub-board may be included. The uniqueness of the distributed antenna system 200 of the present disclosure is the synchronization module. With the synchronization module, the plurality of TDD signals can be processed synchronously when the plurality of TDD signals needs to be received.

As shown in FIG. 2, the distributed antenna system 200 adapts to one set of 4G TDD synchronization modules and one set of 5G TDD synchronization module and realizes the synchronization with the corresponding base station according to the base station configuration information. The synchronization module 212 or 213 can parse and output the related Uplink-Downlink information of the current TDD base station. Then, for example, the signal processing module 214 can transmit the frame header of the preferred TDD network through the RF broadcast. Synchronously, through the monitoring broadcast, the synchronous state of the TDD networks, the frame header difference between the TDD networks and the preferred TDD networks, and the Uplink-Downlink switch point of the TDD networks can be broadcasted to the coverage unit via the analog optical fiber optics.

In addition, the coverage unit IRU (not shown in FIG. 2) of the distributed antenna system 200 of the present disclosure receives the frame header identifier (the Uplink-Downlink frame header information of the preferred TDD base station of the access unit) RF-broadcasted by the access unit 210, and meanwhile receive the on-network (synchronization) information of the TDD networks of the current access unit and the frame header Uplink-Downlink difference of the TDD networks through the monitor broadcast. The frame header of the TDD base station networks can be restored to restore the Uplink-Downlink flip information of the TDD networks to the antenna port of the corresponding TDD network to realize the co-site coverage of the multi-mode TDD networks. Thus, the synchronization module 212 or the synchronization module 213 of the access unit 210 of the distributed antenna system 200 of the present disclosure can receive and parse the base station signals to achieve (multi-mode) TDD network (access unit) synchronization. In some embodiments, as shown in FIG. 1, the access unit PBMU&IM2U of the distributed antenna system 100 of the present disclosure achieves high-bandwidth extended remote to the expansion unit (NEU) via an analog optical fiber, and the NEU achieves high-bandwidth extended remote to the coverage unit (IRU) via an analog optical fiber. Then, the RF extended remote deep coverage of the multi-mode TDD network and FDD network can be realized. Moreover, the coverage units IRUs of the distributed antenna systems 100 and 200 of the present disclosure can parse and synchronize to the Uplink-Downlink of the current base station by receiving the RF broadcast and the monitoring broadcast. Thus, the flip switching of the Uplink-Downlink of the TDD network of the corresponding antenna port can be realized, and the co-site and co-location coverage of the multi-mode TDD network can be realized.

In summary, the distributed antenna system 200 includes a first access unit 210 and at least one remote unit (e.g., the remote unit IRU in FIG. 1). The first access unit 210 includes at least one frequency sub-board 211. At least one frequency sub-board of the at least one frequency sub-board 211 can be configured to receive a TDD signal. The first access unit 210 further includes a first synchronization module 213. The first synchronization module 213 can be configured to be communicatively connected to the frequency sub-board (e.g., the sixth frequency sub-board from left to right in FIG. 2) receiving the TDD signal. The first access unit 210 further includes a first signal processing module 214. The first signal processing module 214 can be communicatively connected to the first synchronization module 213 and configured to process the TDD signal received by the at least frequency sub-board. Since the distributed antenna system 200 of the present disclosure includes the first synchronization module 213, the first signal processing module 214 can be communicatively connected to the frequency sub-board receiving the TDD signal and perform the synchronization processing on the TDD signal. Then, the TDD signal can exist in the same distributed antenna system 200 with other TDD signals. Therefore, the distributed antenna system 200 of the present disclosure can process the plurality of TDD signals simultaneously. FIG. 2 illustrates two synchronization modules 212 and 213. However, the system can also include one synchronization module, which can process the synchronization signal to be grouped with other TDD signals. Then, the distributed antenna system of the present disclosure can support a plurality of TDD hybrid networks.

In some embodiments of the present disclosure, the first synchronization module 213 can be configured to parse the TDD signal to achieve TDD synchronization of the distributed antenna system. In some embodiments of the present disclosure, the first access unit 210 further includes a first optical module 215. The optical module 215 can be communicatively connected to the first signal processing module 214 and coupled with the at least one remote unit (e.g., IRU in FIG. 1) via the analog optical fiber.

Further preferably, in embodiments of the present disclosure, the distributed antenna system 200 further includes a second access unit (not shown in FIG. 2 since the structure of the second access unit is the same as the structure of the first access unit 210 shown in FIG. 2). In some embodiments, the second access unit can be coupled with the at least one remote unit via an analog optical fiber. The second access unit can include at least one frequency sub-board. The at least one frequency sub-board can be configured to receive the TDD signal. In addition, the second access unit can further include a second synchronization module. The second synchronization module can be communicatively connected to the frequency sub-board configured to receive the TDD signal. Then, the second access unit can further include the second signal processing module. The second signal processing module can be communicatively connected to the second synchronization module and configured to process the TDD signal received by the at least one frequency sub-board. In some embodiments, the second synchronization module can be configured to parse the TDD signal to achieve the TDD synchronization of the distributed antenna system.

Preferably, in embodiments of the present disclosure, the second access unit can further include the second optical module. The second optical module can be communicatively connected to the second signal processing module and coupled with the at least one remote unit via the analog optical fiber.

Preferably, in embodiments of the present disclosure, the at least one remote unit can include a plurality of remote units (IRUs). The distributed antenna system can further include a network expansion unit (NEU). The NEU can be coupled between the first access unit 210 and the plurality of remote units (IRUs) via an analog optical fiber. Then, in embodiments of the present disclosure, the first optical module can also be configured to receive an uplink analog optical signal from the remote unit and convert the uplink analog optical signal into an uplink analog RF signal.

Preferably, in embodiments of the present disclosure, the first access unit can include a third synchronization module. The third synchronization module can be communicatively connected to another frequency sub-board configured to receive the TDD signal. Then, in embodiments of the present disclosure, the first synchronization module 213 can be a 4G synchronization module, and the third synchronization module 212 can be a 5G synchronization module. In embodiments of the present disclosure, the second access unit can include a fourth synchronization module. The fourth synchronization module can be communicatively connected to another frequency sub-board configured to receive the TDD signal. Then, in embodiments of the present disclosure, the second synchronization module can be a 4G synchronization module, and the fourth synchronization module can be a 5G synchronization module. Thus, the distributed antenna system of the present disclosure can access a plurality of base stations, especially the base stations including a plurality of TDD signals through the first access unit 210 and the second access unit with similar structure as the first access unit 210 that operate simultaneously. For example, the first access unit 210 in FIG. 2 includes a first synchronization module 213 and a third synchronization module 212. Similarly, the second access unit can also include two synchronization modules. Thus, at most, four TDD signals can be processed simultaneously to support a plurality of TDD hybrid networks. For example, the first access unit or the second access unit can only be connected to a base station of one TDD signal. Then, the system can support the access to a single TDD. For example, only one 4G TDD base station or one 5G TDD base station is connected, and meanwhile, the capability of accessing more TDD networks is reserved. When each of the first access unit and the second access unit is connected to a base station of one TDD signal, the system can support the access to the dual TDDs. For example, the system can be connected to a 4G TDD base station and a 5G TDD base station or two 4G TDD base stations or two 5G TDD base stations, and meanwhile, the capability of accessing more TDD networks can be reserved. When each of the first access unit and the second access unit is connected to a base station of two TDD signals and a base station of one TDD signal, the system can support the access to three TDDs. For example, the system can be connected to two 4G TDD base stations and a 5G TDD base station, or one 4G TDD base station or two 5G TDD base stations, or two 4G TDD base stations and one 5G TDD base stations while reserving the capability of accessing more TDD networks. In some other embodiments, when each of the first access unit and the second access unit are connected to the base stations of two TDD signals, the system can support access to four TDDs. For example, the system can be connected to two 4G TDD base stations and two 5G TDD base stations.

Preferably, in embodiments of the present disclosure, the at least one remote unit IRU can include one or more types of network standards, one or more network frequency bands, or one or more service types. In embodiments of the present disclosure, another frequency sub-board of the at least one frequency sub-board can receive the FDD signal. Then, the plurality of TDD signals and FDD signals can co-exist simultaneously.

In addition, a second aspect of the present disclosure further provides a communication system. The communication system can include one or more base stations and the distributed antenna system of the first aspect of the present disclosure. The distributed antenna system can be coupled with one or more base stations.

As shown in FIG. 2, the distributed antenna system of a self-adaptive multi-mode TDD network of the present disclosure includes the following technical effects.

First, the access unit of the distributed antenna system of the present disclosure can support one set or two sets of 4G TDD base station signals to achieve the co-site and co-location of a single 4G TDD network or dual 4G TDD networks.

In addition, the access unit of the distributed antenna system of the present disclosure can preferably support one set of two sets of 5G TDD base station signals to achieve the co-site and co-location of a single 5G TDD network or dual 5G TDD networks. Similarly, the access unit of the distributed antenna system of the present disclosure can support one set of 4G base station signals and two sets of 5G TDD base station signals to achieve the co-site and co-location of the multi-mode TDD networks.

In addition, further preferably, the access unit of the distributed antenna system of the present disclosure can support two sets of 4G base station signals and one set of 5G base station signals to achieve the co-site and co-location of the multi-mode TDD networks. Similarly, the access unit of the distributed antenna system of the present disclosure can support two sets of 4G base station signals and two sets of 5G TDD signals to achieve the co-site and co-location of the multi-mode TDD networks.

Further preferably, the access unit of the distributed antenna system of the present disclosure can transmit the multi-mode TDD network signals via the analog optical module to realize the high bandwidth extended remote. The co-site coverage of the multi-mode TDD network signals can be realized through the remote unit.

Finally, the distributed antenna system of the present disclosure can support multi-mode network extended remote coverage of the combination of 1 to 4 sets of spectrum TDD standards and a plurality of frequency bands of FDD standards.

In summary, each of the distributed antenna systems 100 and 200 of the present disclosure can include the first synchronization module 213. Thus, the system can be communicatively connected to the frequency sub-board receiving the TDD signal to perform synchronization processing on the TDD signal. Thus, the TDD signal can co-exist with other TDD signals in the same distributed antenna system 100 or 200. Then, the distributed antenna system 100 or 200 of the present disclosure can process the plurality of TDD signals simultaneously.

Although different exemplary embodiments of the present disclosure are described, various modifications and changes can be made to embodiments of the present disclosure. One or some advantages of the present disclosure can be realized without departing from the spirit and scope of the present disclosure. For those skilled in the art, members executing the same functions can be appropriately replaced. Features described with reference to a certain accompanying drawing can be combined with features of other accompanying drawings, even in the situation that the combination is not explicitly mentioned. In addition, the method of the present disclosure can be implemented in a software manner where the processor instructions are appropriately used or in a hybrid manner with a combination of software and hardware to obtain the same result. Thus, the modifications to the technical solution of the present disclosure are subject to the scope of the appended claims.

## Claims

1. A distributed antenna system, the distributed antenna system comprising a first access unit and at least one remote unit, wherein the first access unit comprises:
one or more frequency sub-boards, at least one frequency sub-board of the one or more frequency sub-boards being configured to receive a time-division duplexing (TDD) signal;
a first synchronization module configured to be communicatively connected to the frequency sub-board receiving the TDD signal; and
a first signal processing module communicatively connected to the first synchronization module and configured to process the TDD signal received via the at least one frequency sub-board.

2. The distributed antenna system according to claim 1, wherein the first synchronization module is configured to parse the TDD signal to achieve TDD synchronization of the distributed antenna system.

3. The distributed antenna system according to claim 1, wherein the first access unit further includes a first optical module communicatively connected to the first signal processing module and coupled with the at least one remote unit via an analog optical fiber.

4. The distributed antenna system according to claim 1, further comprising a second access unit, the second access unit being coupled with the at least remote unit via the analog optical fiber, wherein the second access unit comprises:
one or more frequency sub-boards, at least one frequency sub-board of the one or more frequency sub-boards being configured to receive a TDD signal;
a second synchronization module configured to be communicatively connected to the frequency sub-board that receives the TDD signal; and
a second signal processing module communicatively connected to the second synchronization module and configured to process the TDD signal received by the at least one frequency sub-board.

5. The distributed antenna system according to claim 4, wherein the second synchronization module is configured to parse the TDD signal to achieve TDD synchronization of the distributed antenna system.

6. The distributed antenna system according to claim 4, wherein the second access unit further comprises a second optical module, the second optical module being communicatively connected to the second signal processing module and coupled with the at least one remote unit via the analog optical fiber.

7. The distributed antenna system according to claim 1,
wherein the at least one remote unit includes a plurality of remote units,
the distributed antenna system further comprises a network expansion unit, the network expansion unit being coupled between the first access unit and the plurality of remote units via the analog optical fiber.

8. The distributed antenna system according to claim 3, wherein the first optical module is further configured to receive an uplink analog optical signal from the remote unit and convert the uplink analog optical signal into an uplink analog radio frequency signal.

9. The distributed antenna system according to claim 1, wherein the first access unit includes a third synchronization module configured to be communicatively connected to another frequency sub-board that receives a TDD signal.

10. The distributed antenna system according to claim 9, wherein the first synchronization module is a 4G synchronization module and the third synchronization module is a 5G synchronization module.

11. The distributed antenna system according to claim 4, wherein the second access unit includes a fourth synchronization module configured to be communicatively connected to another frequency sub-board that receives a TDD signal.

12. The distributed antenna system according to claim 11, wherein the second synchronization module is a 4G synchronization module and the fourth synchronization module is a 5G synchronization module.

13. The distributed antenna system according to claim 1, wherein the at least one remote unit includes one or more types of network standards, one or more network frequency bands, or one or more service types.

14. The distributed antenna system according to claim 1, wherein another frequency sub-board of the one or more frequency sub-boards receives a frequency-division duplexing (FDD) signal.

15. The distributed antenna system according to claim 1, wherein the first access unit is coupled with the at least one remote unit via an analog optical fiber.

16. A communication system, wherein the communication system comprises:
one or more base stations; and
a distributed antenna system coupled with the one or more base stations according to any of claims 1 to 15.
